# FASCICULE DE BREVET EUROPEEN

(11) **EP 2 751 885 B1**
(45) Date de publication et mention de la délivrance du brevet: **18.03.2020**
(21) Numéro de dépôt: 12729051.8
(22) Date de dépôt: 31.05.2012
(51) Int. Cl.: H01R 39/39, H02K 5/14, H01R 39/38

(54) **ASSEMBLAGE SUPPORT CHARBON**
BÜRSTENHALTERANORDNUNG
BRUSH HOLDER ASSEMBLY

(30) Priorité: 08.06.2011 FR 1154985
(43) Date de publication de la demande: 09.07.2014
(73) Titulaire: Valeo Systèmes d'Essuyage, 78322 Le Mesnil Saint Denis (FR)
(72) Inventeur: JENDRASZCZAK, Jean, F-86100 Châtellerault (FR); SERVIN, Alain, 86190 Villiers (FR); BLANCHET, Pierre, F-86140 Clairvaux (FR); LALE, Daniel, F-86100 Châtellerault (FR)
(74) Mandataire: Valeo Systèmes d'Essuyage
(86) Numéro de dépôt international: PCT/EP2012/060217
(87) Numéro de publication internationale: WO 2012/168131

(56) Documents cités:
- EP-A2- 0 220 955
- DE-A1- 10 319 395
- JP-A- 59 110 351
- US-A- 4 074 159
- US-A- 5 886 448

## Description

L'invention concerne un assemblage de support axial de charbon de moteur à courant continu.

La mise en place correcte des charbons de moteurs à courant continu, utilisés notamment comme moteur d'essuie-glaces de véhicules automobiles, est nécessaire au bon fonctionnement de ces derniers pour assurer une fiabilité et une durée de vie les meilleures.

En effet, les charbons équipant ces types de moteurs sont placés axialement, le plan de symétrie longitudinale des charbons étant sensiblement parallèle à et contenant l'axe de rotation du moteur et du collecteur d'induit, de façon que les charbons assurent un contact permanent et continu avec les secteurs placés sur la surface latérale du collecteur en rotation.

Lors du fonctionnement de ce type de moteur, le contact permanent des charbons et des secteurs du collecteur produit des frottements générateurs d'un échauffement de l'ensemble. Cet échauffement peut en outre être augmenté par les pertes Joule occasionnées par un contact électrique défectueux entre les charbons et les secteurs du collecteur.

En particulier, pour assurer un contact électrique satisfaisant du ou des charbons sur la surface des secteurs du collecteur, le collecteur présentant une forme globalement cylindrique, il est opportun que le charbon soit maintenu, en opération et dans le temps, de façon que la zone de contact entre les charbons et la surface des secteurs du collecteur corresponde à une zone de surface cylindrique du collecteur, formée sensiblement par une pluralité de lignes génératrices de la surface cylindrique du collecteur. Une telle contrainte implique un positionnement précis et constant ainsi que le maintien de ce positionnement du charbon axialement, selon une direction parallèle à celle de l'axe de rotation du moteur et du collecteur.

Parmi les solutions actuellement utilisées pour assurer le positionnement et le maintien des charbons de moteurs à courant continu, les solutions les plus courantes connues dans le domaine technique consistent, par exemple, soit à utiliser une lame ressort plane surmoulée dans un support plastique, soit à souder directement une lame électriquement conductrice sur le circuit d'alimentation électrique des charbons, ou encore à fixer une lame ressort sur le support en matériau plastique de l'ensemble au moyen d'une vis.

De telles solutions donnent globalement satisfaction. Chacune d'elles présente toutefois les inconvénients ou les limitations ci-après.

Le surmoulage de la lame ressort dans un support plastique présente l'inconvénient de l'introduction d'une réduction non nulle de l'élasticité de la lame ressort et d'une résistance thermique à l'évacuation de la chaleur dégagée par le frottement du charbon sur le collecteur.

Le soudage direct de la lame électriquement conductrice sur le circuit d'alimentation électrique des charbons présente l'inconvénient d'une transmission inutile, et négative à terme, des vibrations mécaniques, engendrées par le frottement du charbon sur les secteurs du collecteur, au circuit d'alimentation.

La fixation de la lame ressort sur le support au moyen d'une vis est susceptible à terme, du fait des vibrations précitées, d'introduire du jeu dans la liaison lame ressort-support pouvant provoquer une désolidarisation de la vis, et, en cas d'éjection de la vis et d'une rupture de cette liaison, une détérioration des parties tournantes du collecteur et finalement du moteur.

Le document US 5 886 448 divulgue un ensemble comprenant un assemblage de support axial de charbon de moteur à courant continu et un collecteur selon le préambule de la revendication 1.

La présente invention à pour objet de remédier aux inconvénients précités des solutions précédentes connues de l'art antérieur.

En particulier, un objet de la présente invention est la mise en œuvre d'un assemblage de support axial de charbon de moteur à courant continu permettant un positionnement précis et constant du charbon et un maintien de ce positionnement dans le temps. L'usure du charbon du fait du frottement de ce dernier sur le collecteur est ainsi minimisée et cantonnée à une zone correspondant sensiblement à une partie de la surface latérale du collecteur, comprise entre deux lignes génératrices de cette surface.

Un autre objet de la présente invention est également la mise en œuvre d'un assemblage de support axial de charbon de moteur à courant continu permettant d'assurer une bonne dissipation de la chaleur engendrée par le frottement du charbon sur les secteurs du collecteur, afin de maintenir les capacités et caractéristiques mécaniques sensiblement constantes de cet assemblage dans le temps, en dehors de l'usure normale du charbon.

Un autre objet de la présente invention est enfin la mise en œuvre d'un assemblage de support axial de charbon de moteur à courant continu dans lequel le risque de détérioration de la liaison lame ressort-support, génératrice de vibrations, voire des parties tournantes et du collecteur du moteur par détachement d'une vis ou d'un élément de fixation rapporté est sensiblement supprimé.

L'assemblage de support axial de charbon de moteur à courant continu, objet de l'invention, est remarquable en ce qu'il comporte au moins une lame formant ressort, électriquement conductrice, comportant une zone de de fixation du charbon, une zone d'assise de la lame sur un support et une zone de connexion de la lame, et, un support de lame comportant au moins un siège de lame sur lequel la lame formant ressort est engagée et maintenue en position, la zone de fixation du charbon et le charbon étant maintenus en position dans une direction sensiblement parallèle à l'axe de rotation du collecteur du moteur.

L'assemblage objet de l'invention est également remarquable en ce que la lame formant ressort présente un profil de type marche d'escalier, la zone de support du charbon et la zone de connexion de la lame formant ressort étant placées selon deux plans sensiblement parallèles orientés chacun dans une direction sensiblement orthogonale au plan contenant la zone d'assise de la lame formant ressort.

L'assemblage objet de l'invention est également remarquable en ce que la zone de fixation du charbon comporte un logement configuré aux dimensions latérales de ce charbon et dans lequel le charbon est engagé à force.

L' assemblage objet de l'invention est également remarquable en ce que la zone d'assise de la lame formant ressort est sensiblement plane et comporte au moins des moyens de positionnement, de centrage et de fixation de la zone d'assise et de la lame formant ressort sur le support de lame.

L'assemblage objet de l'invention est également remarquable en ce que les moyens de positionnement comportent un premier et un deuxième orifice de positionnement et de centrage placés symétriquement sur la partie plane de la zone d'assise, par rapport au plan de symétrie longitudinale de la lame formant ressort, et, un troisième orifice, le troisième orifice étant sensiblement symétrique par rapport au plan de symétrie longitudinale de la lame formant ressort.

L'assemblage objet de l'invention est en outre remarquable en ce que les moyens de fixation comportent, au niveau de la zone d'assise, une première et une deuxième languette latérale, chacune destiné à être enfichée dans un logement du support de lame.

L'assemblage objet de l'invention est également remarquable en ce que le siège de lame est constitué par une face sensiblement plane destinée à recevoir la zone d'assise de la lame formant ressort, et, des moyens de positionnement, de centrage et de fixation de ladite zone d'assise et de la lame formant ressort coopérant avec les moyens de positionnement, de centrage et de fixation de la lame formant ressort.

L'assemblage objet de l'invention est en outre remarquable en ce que les moyens de centrage et les moyens de fixation de la zone de siège comportent des picots de centrage et de positionnement, les premier, deuxième et troisième orifice de positionnement et de centrage de la zone d'assise de la lame formant ressort étant engagés à force sur les picots, l'ensemble étant fixé par thermoformage des picots.

L'assemblage objet de l'invention est également remarquable en ce que la zone de connexion est formée par une zone sensiblement plane conformée selon une ailette de refroidissement.

L'invention a également pour objet une lame formant ressort électriquement conductrice de support de charbon de moteur à courant continu. Cette lame est remarquable en ce qu'elle comporte une zone de fixation du charbon, une zone d'assise de la lame sur un support et une zone de connexion électrique de la lame. Cette lame présente un profil conformé par emboutissage selon une marche d'escalier, la zone de support du charbon et la zone de connexion de la lame formant ressort étant placées selon deux plans sensiblement parallèles, sensiblement orthogonaux au plan contenant la zone d'assise de la lame formant ressort.

La lame objet de l'invention est en outre remarquable en ce que la zone d'assise est sensiblement plane et comporte au moins des moyens de positionnement et de centrage de la zone d'assise et de la lame formant ressort, les moyens de positionnement et de centrage comportant un premier et un deuxième orifice de positionnement et de centrage placés symétriquement sur la partie plane de la zone d'assise par rapport au plan de symétrie longitudinale de la lame formant ressort, et, un troisième orifice, ce troisième orifice étant sensiblement symétrique par rapport au plan de symétrie longitudinale de la lame formant ressort.

La lame objet de l'invention est enfin remarquable en ce que la zone d'assise comporte en outre des moyens de fixation à un support formés par une première et une deuxième languette latérale destinées à être enfichées dans ce support.

L'assemblage et la lame de support axial de charbon de moteur à courant continu, objets de l'invention, trouvent application à la fabrication de moteurs pour véhicules automobiles, notamment de moteurs d'essuie-glaces.

Ils seront mieux compris à la lecture de la description et à l'observation des dessins ci-après, dans lesquels :
- la figure 1 représente, à titre illustratif, une vue en perspective d'un assemblage de support axial de charbon de moteur à courant continu, conforme à l'objet de la présente invention ;
- la figure 2 représente, à titre illustratif, selon une vue en coupe selon le plan de symétrie longitudinale de la figure 1, un détail d' exécution et de configuration de la lame formant ressort constitutive de l'agencement objet de l'invention ;
- la figure 3 représente, à titre illustratif, selon une vue de dessus de la figure 1, un détail de mise en œuvre de la zone de connexion de la lame et de la connexion de cette dernière à un conducteur de liaison à la bobine du moteur ;
- la figure 4 représente un agencement complet pour deux charbons d'un moteur à courant continu d'essuie glace de véhicule automobile.

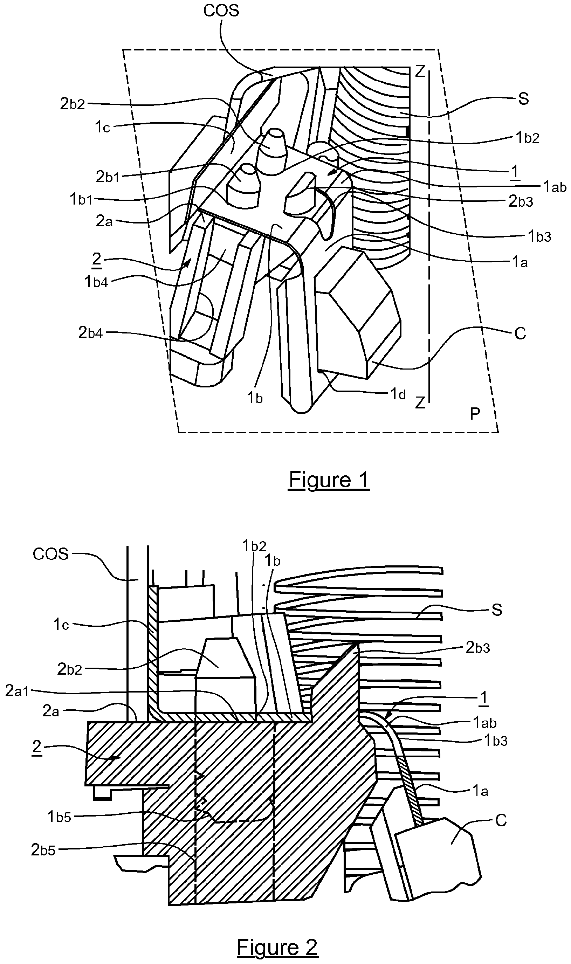

Une description plus détaillée d'un assemblage de support axial de charbon de moteur à courant continu et d'une la lame formant ressort, conformes à l'objet de la présente invention, sera maintenant donnée en liaison avec la figure 1 et la figure 2.

En référence aux figures précitées, l'assemblage de support axial de charbon de moteur à courant continu, selon l'invention, comporte au moins une lame 1 formant ressort, électriquement conductrice, comportant une zone 1a de fixation du charbon C, une zone d'assise 1b de la lame sur un support spécifique et une zone 1c de connexion de la lame à un conducteur, noté COS, relié à la self inductance d'arrêt S d'alimentation du moteur.

En outre, ainsi qu'on l'observera sur la figure 1, l'assemblage objet de l'invention comprend un support 2 de lame comportant au moins un siège de lame, noté 2a, sur lequel la lame 1 formant ressort est engagée et maintenue en position. La position précitée est telle que la zone de fixation 1a du charbon et le charbon C sont maintenus en position dans une direction sensiblement parallèle à l'axe de rotation du collecteur du moteur. Sur la figure 1, l'axe de rotation du collecteur et du moteur est noté ZZ. Cet axe, dans le plan de la figure1, est vertical et contenu dans le plan P de symétrie longitudinale de l'assemblage représenté sur la figure précitée.

Ainsi qu'on l'observera en outre sur la figure 1 et sur la figure 2, la lame 1 formant ressort présente un profil de type marche d'escalier, ou degré, la zone 1a de support du charbon C et la zone 1c de connexion de la lame 1 formant ressort étant placées selon des plans sensiblement parallèles, orientés chacun dans une direction orthogonale sensiblement au plan contenant la zone 1b d'assise de la lame 1 formant ressort. Sur la figure 2, on observe que la zone 1a de support du charbon C et le plan contenant sensiblement cette zone sont orientés avec un angle de valeur déterminée par rapport à la direction du plan contenant la zone de connexion 1c. Cette représentation est due au fait que l'assemblage objet de l'invention est représenté en l'absence du collecteur lequel, lorsque l'assemblage précité est mis en position de contact avec ce dernier au niveau du charbon C, exerce une force d'appui sur ce charbon et provoque, du fait de l'élasticité de la lame 1 formant ressort, notamment de la zone de jonction 1ab de la zone 1a de fixation du charbon et de la zone 1b d'assise, une mise en position de la zone de fixation 1a du charbon selon un plan sensiblement parallèle à celui contenant la zone 1c de connexion de la lame.

D'une manière plus particulière, on indique que la lame 1 formant ressort est constituée par un alliage de cuivre ou par un acier spécial présentant de bonnes propriétés d'élasticité. Elle peut être conformée, ainsi que représenté au dessin par décolletage et emboutissage.

En outre, ainsi qu'on l'observera également sur les figures 1 et 2, la zone de fixation 1a du charbon C comporte un logement 1d configuré aux dimensions latérales du charbon et dans lequel le charbon C est engagé à force. On comprend, en particulier, que la dimension latérale du logement 1d est optimisée pour assurer, d'une part, la fixation du charbon C dans ce logement et le maintien de ce dernier par coincement, et, d'autre part, un bon contact électrique entre la zone 1a de support du charbon C, soit de la lame 1 formant support, et le charbon lui-même.

De même, à l'observation des figures 1 et 2, on constate que la zone d'assise 1b de la lame 1 formant ressort est sensiblement plane et comporte en outre des ressources de positionnement, de centrage et de fixation de la zone d'assise 1b, et, bien entendu, de la lame 1 formant ressort, sur le siège 2a du support 2 de la lame1.

En particulier, ainsi que représenté sur les figures 1 et 2 précitées les ressources de positionnement de centrage et de fixation de la zone d'assise 1b de la lame 1 formant ressort comprennent avantageusement un premier 1b1 et un deuxième 1b2 orifice de positionnement et de centrage, placés symétriquement sur la partie plane de la zone d'assise 1b, par rapport au plan P de symétrie longitudinale de la lame 1 formant ressort.

En outre un troisième orifice 1b3 est prévu, ce troisième orifice étant sensiblement symétrique par rapport au plan P de symétrie longitudinale de la lame formant ressort. Le troisième orifice 1b3 peut avantageusement être placé au voisinage des zones 1a de fixation du charbon et 1b d'assise de la lame 1 formant ressort. De préférence, les premier, deuxième et troisième orifice 1b1, 1b2 et 1b3 sont disposés sensiblement selon un triangle contenu dans la zone d'assise 1b. Ainsi, le premier, le deuxième et le troisième orifice, en raison de leur position par rapport au plan P de symétrie longitudinale de l'assemblage et de la lame, permettent d'effectuer un centrage de celle-ci et du charbon C par rapport à l'axe ZZ de rotation de l'arbre moteur et du collecteur, ainsi qu'il sera expliqué plus en détail ci-après dans la description.

De même, pour assurer le maintien de la position précitée et la fixation de la lame 1 formant support sur le siège 2a du support 2, les ressources de fixation comprennent au niveau de la zone d'assise 1b une première 1b4 et une deuxième 1b5 languette latérale, chacune destinée à être enfichée dans un logement 2b4 et 2b5 ménagé dans le support de lame. À titre d'exemple non limitatif, on indique que les logements 2b4 et 2b5 peuvent avantageusement être constitués par des glissières destinées à recevoir chacune une des languettes précitées par enfoncement, pour assurer le blocage en position de l'ensemble. Le blocage peut être assuré par la conformation du bord latéral des languettes en dents de scie, de façon à empêcher le retrait de chacune des languettes de son logement.

Sur la figure 2, la deuxième languette latérale 1b5 et le logement 2b5, symétriques de la première languette 1b4 respectivement du logement 2b4, par rapport au plan P de symétrie longitudinale sont représentés en trait discontinu .

Enfin, les ressources de positionnement de centrage et de fixation de la zone d'assise comportent des picots, notés 2b1, 2b2 et 2b3, permettant d'assurer le centrage et le positionnement de la zone d'assise 1b, et, bien entendu, de la lame 1, ménagés sur la face sensiblement plane 2a1 du siège 2a. Ces picots coopèrent avec les ressources de positionnement de centrage et de fixation 1b1, 1b2, 1b3 de la lame 1 précédemment décrites. A cet effet, les picots 2b1,2b2 et 2b3 sont disposés, sur la surface plane 2a1 du siège 2a du support 2, selon un triangle correspondant à celui formé par le motif des orifices 1b1, 1b2, 1b3.

Dans ce but, les premier 1b1, deuxième1b2 et troisième 1b3 orifice de positionnement et de centrage de la zone d'assise 1b de la lame 1 formant ressort sont engagés à force sur les picots 2b1,2b2 et 2b3 précités.

D'une manière plus spécifique on indique que le support 2 peut être constitué en un matériau plastique, tel que le Delrin , renforcé par exemple par de la fibre de verre. Ainsi, après engagement à force des orifices précités dans les picots, ces derniers peuvent être soumis à un thermoformage, de façon à sceller en position la lame 1 formant ressort sur le siège 2a du support de lame 2.

Ainsi qu'on l'observera en outre sur la figure 1 et sur la figure 2, la zone de connexion 1c est avantageusement formée par une zone plane conformée selon une ailette de refroidissement. On comprend ainsi que la chaleur engendrée par le frottement du charbon C sur le collecteur de l'arbre du moteur et/ou par effet Joule peut ainsi être évacuée, grâce à la conduction thermique de la lame 1 formant ressort, constituée par un matériau conducteur électrique et thermique, puis par convection et/ou rayonnement par l'ailette précitée. Ce mode de configuration de la lame1 formant ressort permet de réduire ainsi l'échauffement du support 2 et bien entendu de l'ensemble moteur.

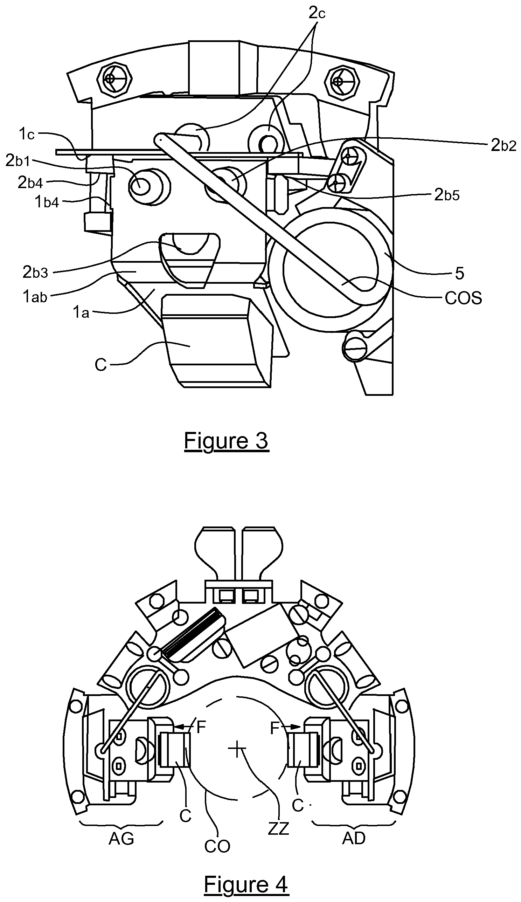

Sur la figure 3, on a représenté une vue de dessus de l'assemblage objet de l'invention représenté en figure 1. Dans un mode de réalisation avantageux non limitatif de ce dernier, on indique que le support 2 peut être avantageusement muni d'un ou plusieurs orifices borgnes 2c ménagés au voisinage de l'implantation en position de la zone de connexion 1c. Un tel agencement permet de positionner et de maintenir le conducteur COS de bobine d'arrêt S au voisinage de l'ailette formée par la zone de connexion 1c, avant l'exécution de l'opération de soudure de ce conducteur à la zone de connexion 1c précitée. L'opération de soudure peut ensuite être effectuée de manière plus aisée et plus rapide sur un banc de production.

Enfin, sur la figure 4 on a représenté un ensemble complet d'assemblage de support axial de charbon de moteur à courant continu, conforme à l'objet de l'invention, comportant deux charbons et donc deux agencements, un agencement gauche AG et un agencement droit AD, diamétralement opposés par rapport à la surface latérale du cylindre constituant le collecteur CO. Sur la figure 4, seule la position du collecteur CO est représentée par un cercle en trait mixte. Ce dernier exerce un effort F sur chacun des charbons C, effort compensé par l'élasticité de la lame 1 formant ressort et par la zone de jonction 1ab assurant la liaison entre la zone 1a de fixation du charbon C et la zone d'assise 1b.

## Revendications

1. Ensemble comprenant un assemblage de support axial de charbon de moteur à courant continu et un collecteur, ledit assemblage de support comportant au moins :
- une lame (1) formant ressort, électriquement conductrice, comportant une zone (1a) de fixation dudit charbon (C), une zone d'assise (1b) de la lame sur un support et une zone (1c) de connexion de ladite lame ; et,
- un support (2) de lame comportant au moins un siège de lame (2a) sur lequel ladite lame formant ressort est engagée et maintenue en position, la zone de fixation (1a) du charbon et le charbon étant maintenus en position dans une direction sensiblement parallèle à l'axe de rotation du collecteur du moteur,
**caractérisé en ce que** ladite zone d'assise (1b) de la lame formant ressort est sensiblement plane et comporte au moins des moyens de positionnement, de centrage et de fixation de ladite zone d'assise et de la lame formant ressort sur le siège de lame (2a) et le support de lame (2), lesdits moyens comprenant un premier (1b1) et un deuxième (1b2) orifice de positionnement et de centrage, placés symétriquement sur la partie plane de la zone d'assise (1b), par rapport au plan (P) de symétrie longitudinale de la lame (1) formant ressort.

2. Ensemble selon la revendication 1, **caractérisé en ce que** ladite lame (1) formant ressort présente un profil de type marche d'escalier, la zone (1a) de support du charbon et la zone (1c) de connexion de ladite lame formant ressort étant placées selon deux plans sensiblement parallèles orientés chacun dans une direction orthogonale au plan contenant la zone (1b) d'assise de la lame formant ressort.

3. Ensemble selon la revendication1 ou 2, **caractérisé en ce que** ladite zone de fixation (1a) dudit charbon comporte un logement configuré aux dimensions latérales de ce charbon et dans lequel ledit charbon est engagé à force.

4. Ensemble selon l'une quelconque des revendications 1 à 3, **caractérisé en ce que** lesdits moyens de positionnement comportent :
- un premier (1b1) et un deuxième (1b2) orifice de positionnement et de centrage placés symétriquement sur la partie plane de ladite zone d'assise, par rapport au plan (P) de symétrie longitudinale de la lame (1) formant ressort ;
- un troisième (1b3) orifice, ledit troisième orifice étant sensiblement symétrique par rapport au plan (P) de symétrie longitudinale de la lame formant ressort.

5. Ensemble selon l'une quelconque des revendications 1 à 3, **caractérisé en ce que** lesdits moyens de fixation comportent, au niveau de ladite zone d'assise (1b), une première (1b4) et une deuxième (1b5) languette latérale, chacune destinée à être enfichée dans un logement (2b4, 2b5) dudit support de lame.

6. Ensemble selon les revendications 4 et 5, **caractérisé en ce que** ledit siège de lame (2a) est constitué par :
- une face sensiblement plane (2a1) destinée à recevoir la zone d'assise (1a) de la lame formant ressort ;
- des moyens de positionnement, de centrage et de fixation (2b1, 2b2, 2b3) de ladite zone d'assise (1b) et de la lame (1) formant ressort coopérant avec lesdits moyens (1b1, 1b2, 1b3) de positionnement, de centrage et de fixation de la lame (1) formant ressort.

7. Ensemble selon la revendication 6, **caractérisé en ce que** les moyens de positionnement, de centrage et de fixation de la zone d'assise comportent des picots (2b1,2b2, 2b3) de centrage et de positionnement, les premier, deuxième et troisième orifice de positionnement et de centrage de la zone d'assise de la lame formant ressort étant engagés à force sur lesdits picots, l'ensemble étant fixé par thermoformage des picots.

8. Ensemble selon l'une des revendications 1 à 7, **caractérise en ce que** ladite zone de connexion (1c) est formée par une zone sensiblement plane conformée selon une ailette de refroidissement.

## Patentansprüche

1. Anordnung, welche eine Baugruppe zur axialen Abstützung einer Kohlebürste eines Gleichstrommotors und einen Kollektor umfasst, wobei die Abstützungsbaugruppe wenigstens aufweist:
- eine elektrisch leitende Federplatte (1), die einen Bereich (1a) der Befestigung der Kohlebürste (C), einen Bereich (1b) des Sitzes der Platte auf einer Abstützung und einen Bereich (1c) der Verbindung der Platte aufweist; und
- eine Plattenabstützung (2), welche wenigstens einen Plattensitz (2a) aufweist, auf welchem die Federplatte anliegt und in ihrer Position gehalten wird, wobei der Befestigungsbereich (1a) der Kohlebürste und die Kohlebürste in einer Richtung in ihrer Position gehalten werden, die im Wesentlichen parallel zur Drehachse des Kollektors des Motors ist,
**dadurch gekennzeichnet, dass** der Sitzbereich (1b) der Federplatte im Wesentlichen eben ist und wenigstens Mittel zur Positionierung, Zentrierung und Befestigung des Sitzbereichs und der Federplatte auf dem Plattensitz (2a) und der Plattenabstützung (2) aufweist, wobei diese Mittel eine erste (1b1) und eine zweite (1b2) Positionier- und Zentrieröffnung umfassen, die symmetrisch bezüglich der Längssymmetrieebene (P) der Federplatte (1) auf dem ebenen Teil des Sitzbereichs (1b) angeordnet sind.

2. Anordnung nach Anspruch 1, **dadurch gekennzeichnet, dass** die Federplatte (1) ein Profil von der Art einer Treppenstufe aufweist, wobei der Bereich (1a) der Abstützung der Kohlebürste und der Bereich (1c) der Verbindung der Federplatte in zwei im Wesentlichen parallelen Ebenen angeordnet sind, die jeweils in einer Richtung ausgerichtet sind, die zu der den Sitzbereich (1b) der Federplatte enthaltenden Ebene orthogonal ist.

3. Anordnung nach Anspruch 1 oder 2, **dadurch gekennzeichnet, dass** der Bereich der Befestigung (1a) der Kohlebürste eine Aufnahme aufweist, die entsprechend den seitlichen Abmessungen dieser Kohlebürste gestaltet ist und in welche die Kohlebürste kraftschlüssig eingesetzt ist.

4. Anordnung nach einem der Ansprüche 1 bis 3, **dadurch gekennzeichnet, dass** die Positioniermittel aufweisen:
- eine erste (1b1) und eine zweite (1b2) Positionier- und Zentrieröffnung, die symmetrisch bezüglich der Längssymmetrieebene (P) der Federplatte (1) auf dem ebenen Teil des Sitzbereichs angeordnet sind;
- eine dritte (1b3) Öffnung, wobei die dritte Öffnung im Wesentlichen symmetrisch bezüglich der Längssymmetrieebene (P) der Federplatte ist.

5. Anordnung nach einem der Ansprüche 1 bis 3, **dadurch gekennzeichnet, dass** die Befestigungsmittel am Sitzbereich (1b) eine erste (1b4) und eine zweite (1b5) seitliche Zunge aufweisen, die jeweils dazu bestimmt sind, in eine Aufnahme (2b4, 2b5) der Plattenabstützung eingesteckt zu werden.

6. Anordnung nach den Ansprüchen 4 und 5, **dadurch gekennzeichnet, dass** der Plattensitz (2a) aus Folgendem besteht:
- einer im Wesentlichen ebenen Seite (2a1), die dazu bestimmt ist, den Sitzbereich (1a) der Federplatte aufzunehmen;
- Mittel zur Positionierung, Zentrierung und Befestigung (2b1, 2b2, 2b3) des Sitzbereichs (1b) und der Federplatte (1), die mit den Mitteln (1b1, 1b2, 1b3) zur Positionierung, Zentrierung und Befestigung der Federplatte (1) zusammenwirken.

7. Anordnung nach Anspruch 6, **dadurch gekennzeichnet, dass** die Mittel zur Positionierung, Zentrierung und Befestigung des Sitzbereichs Zapfen (2b1, 2b2, 2b3) zur Zentrierung und Positionierung aufweisen, wobei die erste, zweite und dritte Positionier- und Zentrieröffnung des Sitzbereichs der Federplatte kraftschlüssig auf die Zapfen aufgesteckt sind, wobei die Anordnung durch Warmverformung der Zapfen befestigt ist.

8. Anordnung nach einem der Ansprüche 1 bis 7, **dadurch gekennzeichnet, dass** der Verbindungsbereich (1c) von einem im Wesentlichen ebenen Bereich gebildet wird, der entsprechend einer Kühlrippe ausgebildet ist.

## Claims

1. Assembly comprising an axial brush holder assembly for a direct current motor and a collector, said holder assembly including at least:
- an electrically conductive leaf spring (1) including an area (1a) for fixing said brush (C), an area (1b) for seating the leaf spring on a support and a leaf spring connection area (1c); and
- a leaf spring support (2) including at least a leaf spring seat (2a) on which said leaf spring is engaged and retained in position, the brush fixing area (1a) and the brush being retained in position in a direction substantially parallel to the rotation axis of the collector of the motor,
**characterized in that** said leaf spring seating area (1b) is substantially plane and includes at least means for positioning, centering and fixing said seating area and the leaf spring on the leaf spring seat (2a) and the leaf spring support (2), said means comprising a first positioning and centering orifice (1b1) and a second positioning and centering orifice (1b2) disposed symmetrically on the plane part of said seating area (1b), with respect to the longitudinal plane (P) of symmetry of the leaf spring (1).

2. Assembly as claimed in claim 1, **characterized in that** said leaf spring (1) has a profile like a staircase step, the brush support area (1a) and the connection area (1c) of the leaf spring being in two substantially parallel planes each oriented in a direction orthogonal to the plane containing the leaf spring seating area (1b).

3. Assembly as claimed in claim 1 or 2, **characterized in that** said brush fixing area (1a) includes a housing configured to suit the lateral dimensions of that brush and in which said brush is force-fitted.

4. Assembly as claimed in any one of claims 1 to 3, **characterized in that** said positioning means include:
- a first positioning and centering orifice (1b1) and a second positioning and centering orifice (1b2) disposed symmetrically on the plane part of said seating area with respect to the longitudinal plane (P) of symmetry of the leaf spring (1); and
- a third orifice (1b3), said third orifice being substantially symmetrical with respect to the longitudinal plane (P) of symmetry of the leaf spring.

5. Assembly as claimed in any one of claims 1 to 3, **characterized in that** said fixing means include, at the level of said seating area (1b), a first lateral tongue (1b4) and a second lateral tongue (1b5) each intended to be inserted into a housing (2b4, 2b5) of said leaf spring support.

6. Assembly as claimed in claims 4 and 5, **characterized in that** said leaf spring seat (2a) includes:
- a substantially plane face (2a1) intended to receive the area (1a) for seating the leaf spring; and
- means (2b1, 2b2, 2b3) for positioning, centering and fixing said seating area (1b) and the leaf spring (1) cooperating with said positioning, centering and fixing means (1b1, 1b2, 1b3) of the leaf spring (1).

7. Assembly as claimed in claim 6, **characterized in that** the seating area positioning, centering and fixing means include centering and positioning pegs (2b1, 2b2, 2b3), the first, second and third orifices for positioning and centering the area for seating the leaf spring being force-fitted over said pegs and the assembly being fixed together by thermoforming the pegs.

8. Assembly as claimed in any one of claims 1 to 7, **characterized in that** said connection area (1c) is formed by a substantially plane area conformed as a cooling fin.
